Europäisches Patentamt

**European Patent Office**

**Office européen des brevets**

(19)

(11) Veröffentlichungsnummer: **0 078 423**
**B1**

(12)

# EUROPÄISCHE PATENTSCHRIFT

(45) Veröffentlichungstag der Patentschrift:
**31.07.85**

(21) Anmeldenummer: **82109495.0**

(22) Anmeldetag: **14.10.82**

(51) Int. Cl.⁴: **A 47 J 43/046,** A 47 J 43/08,
H 02 K 5/124

(54) **Mehrzweck-Küchenmaschine mit einem elektrischen Antriebsmotor.**

(30) Priorität: **04.11.81 DE 8132225 U**

(43) Veröffentlichungstag der Anmeldung:
**11.05.83 Patentblatt 83/19**

(45) Bekanntmachung des Hinweises auf die Patenterteilung:
**31.07.85 Patentblatt 85/31**

(84) Benannte Vertragsstaaten:
**FR GB IT NL**

(56) Entgegenhaltungen:
**BE - A - 571 304**
**CH - A - 340 320**
**DE - A - 2 461 286**
**DE - A - 3 001 182**
**GB - A - 816 594**
**US - A - 1 809 363**
**US - A - 1 874 079**

(73) Patentinhaber: **Braun Aktiengesellschaft,
Rüsselsheimer Strasse 22, D-6000 Frankfurt/Main (DE)**

(72) Erfinder: **Franke, Wolfgang, Walter-Rietig Strasse 41,
D-6070 Langen (DE)**

(74) Vertreter: **Einsele, Rolf, Braun Aktiengesellschaft
Postfach 1120 Frankfurter Strasse 145, D-6242 Kronberg
Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft eine Mehrzweck-Küchenmaschine mit einer elektromotorisch betriebenen, eine Kunststoffhülse tragenden und über diese mit verschiedenen Werkzeugen koppelbaren Antriebswelle, die dichtend durch die Trennwand zwischen dem Motorraum und dem Arbeitsraum des Gerätes hindurchgeführt ist.

Es ist bei Mehrzweck-Küchenmaschinen bekannt, die mit unterschiedlichen Werkzeugen kuppelbare, in den Arbeitsraum des Gerätes ragende Antriebswelle durch Wellendichtungen an sich bekannter Art, beispielsweise Wellendichtringe, Stopfbuchsen, Labyrinth-Dichtungen, im Bereich der Wellendurchführung abzudichten, um damit das Eindringen der im Arbeitsraum des Küchengerätes jeweils befindlichen flüssigen oder teigförmigen Masse oder auch anderer Verunreinigungen in den Motoraufnahmeraum der Küchenmaschine zu verhindern. Eine Voraussetzung hierzu ist die exakte Anpassung der Antriebswelle an die ihr zugeordnete Durchführung innerhalb der Trennwand zwischen dem Arbeitsraum und dem Motoraufnahmeraum der Küchenmaschine. Dieses Erfordernis bedingt — wie beispielsweise die DE-A-2 461 286 zeigt — eine relativ aufwendige Lagerung der Arbeitswelle und geeignete Werkstoffpaarungen (Metall-Kunststoff) im Bereich der Trennwand, woraus relativ hohe Herstellungskosten resultieren.

Der Erfindung liegt die Aufgabe zugrunde, die an der Trennwand zwischen dem Motoraufnahmeraum und dem Arbeitsraum der Mehrzweck-Küchenmaschine angeordnete Durchführung für die Antriebswelle weitaus einfacher als bisher zu gestalten unter Vermeidung der bisher üblichen, sich kostensteigernd auswirkenden engen Toleranzen, wobei nach wie vor eine gebrauchsgerechte Abdichtung des Arbeitsraumes gegenüber dem Motoraufnahmeraum des Gerätes gewährleistet sein soll.

Die erfindungsgemäße Mehrzweck-Küchenmaschine löst diese Aufgabe gemäß dem kennzeichnenden Teil des Patentanspruchs 1 dadurch, daß die Kunststoffhülse (7) an ihrem unteren Ende einen Kragen (7.1) aufweist, der — von unten an einer Dichtglocke (9) anliegend — diese axial gegen eine zwischengelegte, elastische Ringdichtung (10) in Richtung eines in die Trennwand (8) eingeformten Lagerauges (8.2) preßt, wobei in dem Kragen (7.1) eine nach oben offene Ringnut (7.2) zur Aufnahme eines Gleitmittels eingeformt ist. Im Patentanspruch 2 ist eine vorteilhafte Weiterbildung des Erfindungsgegenstandes angegeben.

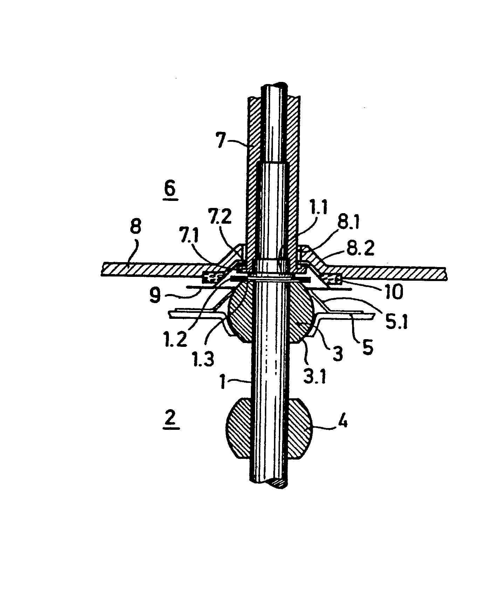

Im folgenden wird die Erfindung anhand eines in der Zeichnung dargestellten Ausführungsbeispiels näher erläutert:

Wie die Zeichnung erkennen läßt, ist die Antriebswelle 1 des Haushaltsgerätes im Motoraufnahmeraum 2 gelagert durch handelsübliche gerätefest angeordnete Lager 3 und 4. Jeder dieser Lager besitzt — wie anhand der Darstellung des Lagers 3 ersichtlich — einen kugelartigen Mantel 3.1 und wird von einer kalottenartig geformten Gehäuseschale 5 aufgenommen. Gegen diese Gehäuseschale wird das Lager 3 durch einen an der Schale 5 befestigten federnden Andruckring 5.1 angepreßt.

Ein Sicherungsring aus Stahl 1.2 mit einer Auflage aus elastischem Material 1.3 dient in an sich bekannter Weise der axialen Sicherung der Antriebswelle 1 gegenüber den beiden sie aufnehmenden gerätefesten Lagern 3 und 4.

Im Bereich des Arbeitsraumes 6 des Haushaltsgerätes ist die Antriebswelle 1 — bestehenden Sicherheitsvorschriften entsprechend — mit einer elektrisch isolierenden Hülse 7 aus Kunststoff ummantelt. Diese Hülse erstreckt sich im Bereich der an der Trennwand 8 zwischen dem Arbeitsraum 6 und dem Motoraufnahmeraum 2 des Haushaltsgerätes angeordneten Durchführung durch die Trennwand 8 hindurch. Die eigentliche Durchführung besteht hier aus einer die Antriebswelle 1 einschließlich der aufgesetzten Hülse 7 mit Spiel umgebenden Bohrung 8.1 in der Trennwand 8 des Gerätegehäuses. Zur Abdichtung des Arbeitsraumes 6 gegenüber dem Motoraufnahmeraum 2 ist nun der Hülse 7 unterhalb der Durchführung 8.1 ein Kragen 7.1 angeformt, der mit einer Ringnut 7.2 versehen ist. Diese Ringnut 7.2 enthält ein Gleitmittel. das zugleich die Abdichtung des rotierenden Kragens 7.1 gegenüber einer feststehenden, mit ihrem Innenrand auf dem Kragen 7.1 aufliegenden Dichtglocke 9 bewirkt.

Wie in der Zeichnung erkennbar ist, befindet sich die Bohrung 8.1 in einem glockenförmig ausgebildeten, in die Trennwand 8 eingeformten Lagerauge 8.2. Gegen dieses Lagerauge stützt sich die Oberseite der vorstehend erwähnten Dichtglocke 9 ab, die andererseits auf dem Kragen 7.1 der Hülse 7 aufliegt, wobei zwischen der Dichtglocke 9 und dem Lagerauge 8.2 eine Ringdichtung 10 vorgesehen ist, die aus elastischem organischen Material, beispielsweise Moosgummi, besteht. Das Andrücken der vorzugsweise aus Material mit hoher Eigenelastizität bestehenden Dichtglocke 9 gegen die Ringdichtung 10 erfolgt mittels des Kragens 7.1 der mit der Antriebswelle 1 verpreßten Hülse 7, die selbst auf einem der Antriebswelle 1 angeformten Bund 1.1 aufsitzt und damit in ihrer funktionsgerechten Lage zur Antriebswelle 1 gehalten ist.

In einer vorteilhaften Ausgestaltung der Erfindung bestehen zwischen dem Umfang der Hülse 7 und der Bohrung 8.1 des Lagerauges 8.2 sowie zwischen dem Lagerauge 8.2 und der diesem infolge der dazwischenliegenden Ringdichtung 10 mit geringem Abstand zugewandten Dichtglocke 9 Freiräume, die ebenso wie die Ringnut 7.2 des Kragens 7.1 Gleitmittel enthalten können, das zur Abdichtung der Wellendurchführung beiträgt.

Durch das erfindungsgemäße Zusammenwirken der Dichtglocke 9 mit dem Lagerauge 8.2 einschließlich der dazwischenliegenden Ringdichtung 10 einerseits und mit dem der Hülse angeformten, die Ringnut 7.2 aufweisenden Kragen 7.1 andererseits unter Einschluß des in der Ringnut 7.2 gespeicherten Gleitmittels wird auch bei relativ großen Toleranzen zwischen dem Außendurchmesser der der Antriebswelle 1 zugehörigen Kunststoffhülse 7 und der Bohrung 8.1 der Trennwand 8 eine dauerhafte, sichere Abdichtung der sich vom Motoraufnahmeraum 2 in den Arbeitsraum 6 einer Küchenmaschine erstreckenden Wellendurchführung geschaffen.

## Patentansprüche

1. Mehrzweck-Küchenmaschine mit einer elektromotorisch betriebenen, eine Kunststoffhülse (7) tragenden und über diese mit verschiedenen Werkzeugen koppelbaren Antriebswelle (1) die dichtend durch die Trennwand (8) zwischen dem Motorraum (2) und dem Arbeitsraum (6) des Gerätes hindurchgeführt ist, dadurch gekennzeichnet, daß die Kunststoffhülse (7) an ihrem unteren Ende einen Kragen (7.1) aufweist, der — von unten an einer Dichtglocke (9) anliegend — diese axial gegen eine zwischengelegte, elastische Ringdichtung (10) in Richtung eines in die Trennwand (8) eingeformten Lagerauges (8.2) preßt, wobei in dem Kragen (7.1) eine nach oben offene Ringnut (7.2) zur Aufnahme eines Gleitmittels eingeformt ist.

2. Mehrzweck-Küchenmaschine nach Anspruch 1, dadurch gekennzeichnet, daß die Kunststoffhülse (7) unter Freilassung eines Ringspaltes durch das Lagerauge (8.2) geführt ist und daß zwischen der Oberseite der Dichtglocke (9) und der Unterseite des Lagerauges (8.2) ein geringer freier Abstand besteht.

## Claims

1. Multipurpose food preparation machine with an electromotively operated drive shaft (1), which carries a plasticse sleeve (7) and can be connected via the latter to various implements, said shaft being sealingly passed through the partition (8) between the motor space (2) and the working space (6) of the machine, characterized in that at its lower end, the plastics sleeve (7) has a collar (7.1), which engaging from the bottom on a sealing bell (9), presses the latter axially against an interposed, elastic sealing ring (10) in the direction of a bearing orifice (8.2) formed in the partition (8), an annular groove (7.2) for receiving a lubricant and which is open at the top being formed in the collar (7.1).

2. Multipurpose food preparation machine according to claim 1, characterized in that the plastics sleeve (7) is passed through the bearing orifice (8.2), whilst leaving an annular clearance and that between the top of the sealing bell (9) and the bottom of the bearing orifice (8.2) there is a small free spacing.

## Revendications

1. Robot de cuisine comportant un arbre d'entraînement (1) qui est entraîné par un moteur électrique, porte une douille plastique (7), peut être couplé par l'intermédiaire de celle-ci à différents outils et passe, avec étanchéité, à travers la paroi séparatrice (8) située entre l'espace moteur (2) et l'espace de travail (6) de l'appareil, caractérisé en ce que la douille de plastique (7) présente à son extrémité inférieure un collet (7.1) qui — s'appuyant d'en bas contre une cloche d'étanchéité (9) — la pousse axialement contre une garniture d'étanchéité annulaire (10) élastique interposée, dans la direction d'un bossage d'appui (8.2) venu de forme dans la paroi séparatrice, étant précisé que dans le collet (7.1) est venue de forme une rainure annulaire (7.2) ouverte vers le haut pour recevoir un lubrifiant.

2. Robot de cuisine selon la revendication 1, caractérisé en ce que la douille de plastique (7) passe à travers le bossage d'appui (8.2) en laissant libre une fente annulaire; et en ce qu'entre la face supérieure de la cloche d'étanchéité (9) et la face inférieure du bossage d'appui (8.2) existe une petite distance libre.